(19) Europäisches Patentamt
European Patent Office
Office européen des brevets

(11) **EP 2 187 277 A1**

(12) **EUROPÄISCHE PATENTANMELDUNG**

(43) Veröffentlichungstag:
**19.05.2010 Patentblatt 2010/20**

(51) Int Cl.:
***G05B 13/02*** *(2006.01)*

(21) Anmeldenummer: **08019906.0**

(22) Anmeldetag: **14.11.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Linde AG**
**80331 München (DE)**

(72) Erfinder: **Kiener, Christoph**
**09599 Freiberg (DE)**

(74) Vertreter: **Imhof, Dietmar**
**Linde AG**
**Legal Services Intellectual Property**
**Dr.-Carl-von-Linde-Straße 6-14**
**82049 Pullach (DE)**

(54) **Verfahren zur Vorhersage einer zeitlich variablen Kenngrösse eines technischen Prozesses**

(57) Das Verfahren dient zur Vorhersage einer zeitlich variablen Kenngröße eines technischen Prozesses, der mindestens zwei Typen von Arbeitsphasen aufweist, die wiederholt nacheinander durchlaufen werden und jeweils eine variable Dauer aufweisen. Bei dem Verfahren wird in einem Lernmodus über einen Erfahrungszeitraum jeder Typ von Arbeitsphase mehrfach durchlaufen, für jeden Typ von Arbeitsphase wird bei einer Mehrzahl von Durchläufen die tatsächliche Dauer der jeweiligen Arbeitsphase gemessen und diese Zeitdauer wird für alle analysierten, typgleichen·Arbeitsphasen in der Vergangenheit gemeinsam geordnet gesammelt, sodass sich eine Häufigkeitsverteilung der Dauer des entsprechenden Typs von Arbeitsphase ergibt. In einem Prognosemodus wird zu einem aktuellen Zeitpunkt der aktuelle Typ von Arbeitsphase ermittelt, die bisher verstrichene Phasendauer bestimmt wird und auf der Grundlage der im Lernmodus ermittelten Häufigkeitsverteilung der Dauer des entsprechenden Typs von Arbeitsphase ein Prognosewert der Kenngröße an mindestens einem in der Zukunft liegenden Zeitpunkt bestimmt.

**Fig. 5**

X Minuten

Dauer/min

EP 2 187 277 A1

Printed by Jouve, 75001 PARIS (FR)

**Beschreibung**

Die Erfindung betrifft ein Verfahren zur Vorhersage einer zeitlich variablen Kenngröße eines technischen Prozesses.

Bestimmte Kenngrößen eines technischen Prozesses können im zeitlichen Verlauf schwanken. Schwankungen können einem getakteten Muster folgen (periodische Prozesse) oder aber auch zufallsbedingt sein (z. B. eine Störung des technischen Prozesses).

Die Kenngröße eines einfachen, ideal periodischen Prozesses folgt z. B. einer Sinuskurve oder z. B. einer Stufenfunktion und wird durch eine Reihe von Parametern charakterisiert. Im Falle der Sinusfunktion sind dies beispielsweise die Periodendauer (Frequenz), der Startpunkt der Kenngröße (Phasenverschiebung) und die Signalhöhe (Amplitude) oder im Falle der Stufenfunktion die Dauer der Betriebsphase, die Dauer der Ruhephase, den Startzeitpunkt und die Signalhöhe der Betriebsphase. Andere Funktionen (Sägezahnfunktion, Dreiecksfunktion, Betriebsphasen als Überlagerung verschiedener Funktionen) sind ebenfalls denkbar.

Ein technischer, quasi-periodisch ablaufender Prozess ist eine Kombination eines idealen periodischen Prozesses, wobei die für die Kenngröße charakteristischen Parameter einer natürlichen Schwankung unterliegen, sowie zufälliger Störungen. Die Folge sind Schwankungen der den Takt bestimmenden Parameter (Pausen- und Betriebsphasen) sowie von Schwankungen in der Signalhöhe (Amplitude).

Ein Beispiel für einen technischen Prozess, der weitgehend aus periodischen Abläufen besteht, ist die Herstellung von Stahl aus Roheisen in Konvertern durch Einblasen von Sauerstoff. Beispiele für technische Prozesse, die entstehenden Schwankungen ausgesetzt sind, sind die Bereitstellung von Sauerstoff aus einer Luftzerlegungsanlage oder die Weiterverarbeitung der entstehenden Konvertergase, die im selben Rhythmus anfallen. Ähnliche technische Prozesse finden sich z. B. in der Bereitstellung von Elektroenergie, in der Wasserwirtschaft, in der betrieblichen Produktion etc.

Der "technische Prozess" im Sinne der Erfindung weist verschiedene "Arbeitsphasen" auf, die während des regulären Betriebs im zeitlichen Verlauf nacheinander wiederholt durchschritten werden. Die Anzahl der Typen von Arbeitsphasen muss mindestens zwei sein, kann aber auch drei oder mehr sein, wobei diese Phasen immer in derselben Reihenfolge oder auch in wechselnder Reihenfolge auftreten können. In jedem Fall muss ein Kriterium für jeden Übergang von einer Arbeitsphase in eine andere vorhanden sein, der auftreten kann. Im einfachsten Fall alternieren zwei Typen Arbeitsphasen, beispielsweise Betriebs- und Ruhephasen.

Der Erfindung liegt die Aufgabe zugrunde, den künftigen Verlauf der zeitlich variablen Kenngröße vorherzusagen.

Diese Aufgabe wird durch die Merkmale des Anspruchs 1 gelöst.

Bei dem erfindungsgemäßen Verfahren wird aus der Langzeithistorie eines technischen Prozesses eine Kurzzeitprognose erstellt, sodass von der Kenngröße abhängige Produktionsanlagen oder Ähnliches entsprechend angepasst werden können und beispielsweise rohstoffsparender oder energiesparender produziert werden kann. Statt durch Nachregeln kann bereits auf kommende Zustände durch ein angepasstes Vorfahren reagiert werden. Beispielsweise können auch Puffersysteme dadurch kleiner dimensioniert werden.

In einem "Lemmodus" wird zunächst der tatsächliche zeitliche Verlauf (Langzeithistorie über einen Erfahrungszeitraum) der zu vorhersagenden Kenngröße analysiert, und zwar in Form der Messung der tatsächlichen Dauer der einzelnen Arbeitsphasen. Die Zeitachse ist in der Regel diskret, da im Verfahren numerisch, vorzugsweise mit äquidistanten Zeitschritten vorgegangen wird. Diese Daten sollten über einen möglichst langen Zeitraum aufgenommen werden, der hier als "Erfahrungszeitraum" bezeichnet wird. Als Kriterium für die Anzahl n der auszumessenden Arbeitsphasen kann die

Streuung der Dauern $\tau_k$ der Arbeitsphasen herangezogen werden, wobei gelten sollte

$$\sigma/\mu < \varepsilon$$

mit

$\mu$ = Mittelwert der Dauer der Arbeitsphasen $\tau_k$

$\sigma$ = Standardabweichung der Dauer der Arbeitsphasen

Je kleiner $\varepsilon$ ist, umso genauer wird die Vorhersage. Ausreichend gute Vorhersagen lassen sich treffen ab einem typischen Wert von etwa $\varepsilon < 0,1$.

Jede einzelne Arbeitsphase in der Vergangenheit weist einen Phasenbeginnzeitpunkt auf, der mit dem Zeitpunkt des letzten Phasenwechsels übereinstimmt. Hierbei muss klares Kriterium für Abgrenzung jedes Paares von Arbeitsphasen existieren, das zeitlich benachbart sein kann (Phasenwechsel), beispielsweise ein Schwellenwert eines Parameters, der für eine bestimmte Zeit überschritten oder unterschritten worden sein muss, oder ein anderes Signal, das mit dem technischen Prozess mittelbar oder unmittelbar in Zusammenhang steht. Dazu kann ein Spezialkriterium für bestimmte Sonderfälle kommen, die zwar nicht regelmäßig aber mit gewisser Häufigkeit auftreten.

Die Analyse im Lemmodus führt auf eine Häufigkeitsverteilung der Zeitdauern $\tau_k$ des jeweiligen Typs von Arbeitsphase.

Im Prognosemodus wird nun für jeden Typ von Arbeitsphase eine Prognose erstellt. Hierbei muss ebenfalls definiert sein, in welchem Typ von Arbeitsphase sich der technische Prozess aktuell befindet. Die Kriterien für den Phasenwechsel (und damit für den Phasenbeginnzeitpunkt) sind im Prognosemodus gleich oder ähnlich wie im Lernmodus. Zum Beispiel kann im Lern- und Prognosemodus ein Schwellenwert als Phasenwechselkriterium dienen, wobei im Prognosemodus ein Mindestabstand vom letzten Phasenwechsel vorgesehen ist, während im Lemmodus eine Mindestdauer der Über- beziehungsweise Unterschreitung des Schwellenwerts als Kriterium angesetzt wird.

Die Bestimmung des aktuellen Typs von Arbeitsphase wird in der Regel durch eine dauernde Überwachung auf einen Phasenwechsel (also einen Phasenbeginnzeitpunkt einer neuen Arbeitsphase) vorgenommen. Das Prognosesystem kennt also den letzten Phasenbeginn. Die Methode zur Bestimmung des Phasenbeginnzeitpunkts ist vorzugsweise so ausgestaltet, dass sie nicht nur eindeutig festlegt, dass und wann ein Phasenwechsel stattfindet, sondern auch welcher Typ von Arbeitsphase mit diesem Phasenwechsel beginnt. Die Bestimmung des aktuellen Typs von Arbeitsphase und die Bestimmung des aktuellen Phasenbeginnzeitpunkts sind in diesem Fall keine separaten Arbeitsschritte, sondern gehen Hand in Hand.

Die "bisher verstrichene Phasendauer" wird in dem Prognosemodus durch die Differenz zwischen dem aktuellen Zeitpunkt und dem Phasenbeginnzeitpunkt gebildet.

Aufgrund der im Lemmodus festgestellten Häufigkeitsverteilung der Dauer des aktuellen Typs von Arbeitsphase kann nun für einen oder mehrere in der Zukunft liegende Zeitpunkte die Wahrscheinlichkeit abgeschätzt werden, dass die aktuelle Arbeitsphase zu Ende geht und damit eine Änderung der Kenngröße auftritt (Abbruchwahrscheinlichkeit der Arbeitsphase). Der Umfang dieser Änderung (Hub) der Kenngröße kann zum Beispiel durch einen festen absoluten oder relativen Standardwert der Kenngröße beschrieben werden. Dieser Hub ist für jeden Typ von Arbeitsphase spezifisch. Zur Berechnung des Prognosewerts der Kenngröße wird die oben genannte Wahrscheinlichkeit mit dem Hub der Kenngröße verknüpft, beispielsweise durch Multiplikation, gegebenenfalls zusätzlich durch Multiplikation mit einem Korrekturterm, der aus der im Lemmodus ermittelten Häufigkeitsverteilung ermittelt wird.

Mit dem beschriebenen Verfahren ist es möglich, technische Prozesse vorherzusagen, wenn ihr periodischer Charakter überwiegt. Vorhersage bedeutet im vorliegenden Fall zunächst, einen Prognosewert der Kenngröße für einen zukünftigen Zeitpunkt anzugeben; zusätzlich kann damit eine Abschätzung der Wahrscheinlichkeit verbunden werden, dass der Prozess dann tatsächlich dieser Vorhersage folgt. Es wird eine Echtzeit-Vorhersage der Kenngröße eines technischen Prozesses simultan zum tatsächlichen Verbrauch für eine gewisse Zeitspanne in die Zukunft auf einer diskreten Zeitachse abgegeben, deren Werte äquidistant oder auch unterschiedlich verteilt sein können. Wie weiter unten beschrieben kann bei dem Verfahren durch einen selbstlemenden Algorithmus den Charakter der Kenngröße des technischen Prozesses adaptiert und kontinuierlich aktualisiert werden. Das Verfahren bietet die Vorhersage des Verhaltens von Einzelsystemen wie auch - durch Addition von Einzelsystemen - die Vorhersage eines Ensembles von Einzelsystemen. Ferner kann ein Konfidenzintervall als Wahrscheinlichkeitsabschätzung für den prognostizierten Wert abgegeben werden. Hervorzuheben ist, dass das Verfahren universell anwendbar ist für jede Art alternierender Vorgänge.

Das erfindungsgemäße Verfahren ermöglicht es, mit begrenztem Aufwand aus bisherigen Erfahrungswerten aus dem Betrieb des technischen Prozesses einen verlässlichen Prognosewert der Kenngröße an einem oder mehreren in der Zukunft liegenden Zeitpunkten zu ermitteln. Es erlaubt damit, andere technische Anlagen, welche die Kenngröße beeinflussen oder von ihr beeinflusst werden, an zu erwartende Änderungen der Kenngröße anzupassen.

Vorzugsweise wird in dem Prognosemodus ein zeitlicher Verlauf des Prognosewerts der Kenngröße vom aktuellen Zeitpunkt aus bis zu einem Prognosehorizont bestimmt. Dieser prognostizierte zeitliche Verlauf ermöglicht es, die vorwärts gerichtete Steuerung anderer technischer Anlagen, welche die Kenngröße beeinflussen oder von ihr beeinflusst werden, weiter zu verbessern gegenüber Prognosen für einen oder wenige Einzelzeitpunkte. Unter "zeitlichem Verlauf" wird hier die Angabe eines Prognosewerts für mindestens drei in der Zukunft liegende Zeitpunkte, vorzugsweise 20 bis 200 in der Zukunft liegende Zeitpunkte verstanden.

Das erfindungsgemäße Vorhersageverfahren kann weiter verfeinert werden, indem zusätzlich zum Prognosewert der Kenngröße ein Wahrscheinlichkeitswert ermittelt wird, der die Wahrscheinlichkeit repräsentiert, dass ein für einen bestimmten Zeitpunkt ermittelter Prognosewert eintritt.

Gemäß einer ersten Variante wird in dem Prognosemodus der Prognosewert der Kenngröße zu dem oder den in der Zukunft liegenden Zeitpunkten aus der Abbruchwahrscheinlichkeit bei der diesem Zeitpunkt entsprechenden Phasendauer berechnet. Insbesondere geht hierbei ausschließlich dieser einzelne Wert der Abbruchswahrscheinlichkeit in die Prognose ein, allerdings normiert auf die noch bestehende Gesamtwahrscheinlichkeit des Abbruchs, da ja feststeht, dass der Abbruch noch nicht stattgefunden hat und noch stattfinden muss. Im Prognosemodus muss bei der Abbruchwahrscheinlichkeit der im Lemmodus berechnete zeitliche Verlauf für Häufigkeitsanteile für Dauern unberücksichtigt bleiben, die kleiner als die bisher verstrichene Phasendauer sind, das heißt der aktuelle Wert der Abbruchwahrscheinlichkeit muss auf das Integral über die Abbruchwahrscheinlichkeiten ab dem aktuellen Zeitpunkt normiert werden.

Diese Variante hat den Vorteil, besonders einfach zu arbeiten und wenig Rechenaufwand zu benötigen, insbesondere im Prognosemodus, und trotzdem brauchbare Vorhersagen zu liefern. Der Prognosewert der Kenngröße für den entsprechenden Zeitpunkt kann dabei zum Beispiel als Produkt der Abbruchwahrscheinlichkeit mit einem Durchschnittswert (Hub) der Kenngröße während des entsprechenden Arbeitsphasentyps berechnet werden. Handelt es sich bei der Kenngröße zum Beispiel um eine Gasverbrauchsmenge und wechseln sich bei dem Prozess Betriebsphasen und Pausenphasen ab, so wird vorzugsweise im Lernmodus der Durchschnittswert für die Betriebsphase in Form des durchschnittlichen Gasverbrauchs während der Betriebsphase ermittelt, während der Gasverbrauch in der Pausenphase beispielsweise Null ist.

Gemäß einer zweiten Variante wird in dem Prognosemodus zur Berechnung des Prognosewerts der Kenngröße eine Methode in Anlehnung an eine Monte-Carlo-Methode eingesetzt, wobei in die Berechnung mehrere, insbesondere alle im Lernmodus gemessenen Durchläufe des entsprechenden Typs von Arbeitsphase eingehen, die eine Dauer aufweisen, die mindestens gleich der bisher verstrichenen Phasendauer ist und entsprechend der Häufigkeit ihres Auftretens gewichtet werden.

Diese Variante erfordert zwar einen höheren Rechenaufwand als die vorher geschilderte, liefert allerdings eine zuverlässiger Prognose und ermöglicht auch die Angabe eines Konfidenzintervalls der Prognose. Repräsentiert die Kenngröße beispielsweise eine Gasverbrauchsmenge, so kann die Anlage, welche das Gas herstellt schon frühzeitig auf einen Mehrverbrauch hin eingestellt werden, auch wenn dieser Mehrverbrauch noch nicht im aktuellen Zeitschritt zu erwarten ist. Da derartige Produktionsanlagen immer eine gewisse Anpassungszeit brauchen, kann damit eine verbesserte Anpassung der Produktion an den tatsächlichen Verbrauch erreicht werden.

Es ist ferner günstig, wenn auch während des Prognosemodus weiter für jeden Typ von Arbeitsphase die tatsächliche Dauer der jeweiligen Arbeitsphase gemessen wird und mit Hilfe dieser Messwerte kontinuierlich oder von Zeit zu Zeit eine Aktualisierung der Häufigkeitsverteilungen der Dauer der typgleichen Arbeitsphasen vorgenommen und damit der Erfahrungszeitraum in die jüngere Vergangenheit ausgedehnt wird.

Der Lemmodus wird also über den Beginn des Prognosemodus hinaus fortgesetzt. Es werden weiter Daten gesammelt und für die Prognose verarbeitet. Durch einen selbstlernenden Algorithmus wird der Charakter der Kenngröße des technischen Prozesses adaptiert und kontinuierlich aktualisiert. Die Qualität der Vorhersage steigt.

In diesem Fall kann bei dem erfindungsgemäßen Verfahren sogar der Teil des Lernmodus, der vor dem Prognosemodus stattfindet, auch durch eine Simulation des Prozesses vorgenommen werden. Im Prognosemodus kann dann bei Inbetriebnahme des Prozesses unmittelbar gestartet werden; durch die Fortsetzung des Lemmodus im Prognosemodus wird die Qualität der Prognose erhöht und mögliche Ungenauigkeiten der Simulation werden mit der Zeit ausgeglichen.

Die Verlängerung des Lernmodus bis in die jüngste Vergangenheit bringt schon dann einen Zuwachs an Prognosegenauigkeit, wenn die Messwerte unabhängig von dem Zeitpunkt, zu dem sie aufgenommen wurden, berücksichtigt werden. Noch günstiger ist es aber, jüngere Messwerte höher zu gewichten als ältere (Selbstaktualisierung).

Hier bei ist es günstig, wenn bei der Aktualisierung der Häufigkeitsverteilungen am Ende des Erfahrungszeitraums mit denjenigen am Beginn des Erfahrungszeitraums verglichen werden und, insbesondere wenn die Abweichung ein Schwellenkriterium überschreitet, die Messwerte zu Beginn des bisherigen Erfahrungszeitraums in der Prognosephase nicht mehr berücksichtigt werden, indem ein neuer Erfahrungszeitraum festgelegt wird, der den Beginn des bisherigen Erfahrungszeitraums nicht mehr enthält.

Im einfachsten Fall können die Messwerte aus der Vergangenheit in einem Ringspeicher abgelegt werden. Der Erfahrungszeitraum weist damit eine feste Länge auf. Die neuesten Messwerte ersetzen laufend die ältesten; letztere werden dadurch bei der Prognose nicht mehr berücksichtigt.

Noch eleganter ist es, ältere Messwerte nur dann aus der Prognose auszuschließen, wenn sich signifikante systematische Abweichungen gegenüber den neuesten gemessenen Werten einstellen, die auf eine systematische Veränderung des Prozesszyklus schließen lassen. Hierbei werden beispielsweise die Werte aus den jüngsten x % (0 < x <= 50) des Erfahrungszeitraums mit denjenigen der ältesten x % verglichen. Ein Schwellenkriterium, das auch durch eine Kombination mehrere Einzelkriterien gebildet sein kann, legt fest, ob eine signifikante Abweichung besteht. Ist dies der Fall, werden die ältesten x % aus dem Erfahrungszeitraum gestrichen, die entsprechenden Werte werden bei der Prognose nicht mehr berücksichtigt.

Das erfindungsgemäße Verfahren kann damit auf einen langen Zeitraum angelegt werden. In diesem Fall wächst die Wahrscheinlichkeit, dass sich mit der Betriebsdauer eines Prozesses die Kenngröße und ihr zeitlicher Verlauf systematisch verändert, etwa durch dauerhafte Veränderungen wie zum Beispiel Verschleiß, Ablagerungen in den entsprechenden Anlagenteilen oder auch durch Reparatur- oder Umbaumaßnahmen an Anlagenteilen des technischen Prozesses. Dies wird durch eine Aktualisierung des Datenbestandes berücksichtigt, indem beispielsweise das jüngste und älteste Drittel, Viertel oder Fünftel des Datenbestandes in ihrem Mittelwert und ihrer Standardabweichung miteinander verglichen werden. Schwankt der Mittelwert zu sehr, so werden die ältesten Werte automatisch aus dem Datenbestand entfernt. Real entspricht das im Beispielfall eines Konverterprozesses bei Stahlwerken der baulichen Veränderung (Alterung, Volumenveränderung durch beispielsweise Schlackeablagerungen oder Abtrag von Ausmauerungsmaterial) des Konverterkessels oder eines veränderten Konverterbetriebes (beispielsweise größere Roheisenmenge im Konvertergefäß).

Im Lernmodus und/oder im Prognosemodus können ein oder mehrere Typen von Sonderbetriebsfällen berücksichtigt werden.

Unter einem "Sonderbetriebsfall" wird hier eine zufallsbedingt oder absichtlich eingeführte Veränderung des Arbeitszyklus verstanden, die Einfluss auf die Kenngröße hat, aber keine "Arbeitsphase" im obigen Sinn darstellt. Ein Sonderbetriebsfall tritt nicht regelmäßig wie die Arbeitsphasen des Regelbetriebs auf, sondern zufällig oder mit systematisch veränderter Häufigkeit. Hierbei kann es sich beispielsweise um einen unregelmäßigen Betrieb handeln, bei einem Stahlkonverter etwa um eine Betriebsstörung im Kran- und Transportsystem oder anderweitig kurzfristig verursachte Minderlieferung an Rohstahl (Hochofenstörung) oder anderweitig kurzfristig verursachten Minderbedarf an Konverterstahl (z. B. eine Störung im Stranggießprozess oder im Walzwerk oder ein Reinigungsvorgang). Typischerweise sind solche Störungen nach kurzen Zeiten (ca. 2 - 10 Prozesszyklen) wieder behoben.

Zufallsbedingte Ausfälle sind ihrer Natur nach nicht vorhersagbar. Für den Fall einer bekannten Beeinflussung des Prozesses kann eine separate Vorhersage vorgenommen werden, beruhend auf Daten, die im Rahmen des Lernmodus in Betriebszeiten während solcher Beeinflussungen gewonnen wurden. Eine andere Möglichkeit der Berücksichtigung eines Sonderbetriebsfalls im Lernmodus besteht darin, dass die in der entsprechenden Zeit erhobenen Daten nicht verwendet werden. Im Prognosemodus wird ein Sonderbetriebsfall beispielsweise in Form spezieller Daten oder manueller Eingaben berücksichtigt oder die Erstellung einer Prognose wird ausgesetzt.

Das Vorliegen eines Sonderbetriebsfalls kann - ähnlich wie die Bestimmung des Typs der Arbeitsphase - anhand fester Kriterien automatisch festgestellt werden. Alternativ oder zusätzlich können Informationen des Bedienungs- oder Aufsichtspersonals ausgewertet werden. Im einfachsten Fall meldet das Bedienungspersonal durch einen Knopfdruck das Vorliegen eines bestimmten Typs eines Sonderbetriebsfalls, und im Prognosemodus wird dadurch eine veränderte Berechnungsmethode für den Prognosewert der Kenngröße in Gang gesetzt.

Diese Maßnahmen können für einen einzigen Typ von Sonderbetriebsfall oder auch für mehrere Typen unterschiedlicher Sonderbetriebsfälle vorgenommen werden. Im Lernmodus und im Prognosemodus können unterschiedliche Typen von Sonderbetriebsfällen berücksichtigt werden.

Von solchen Sonderbetriebsfällen zu unterscheiden sind planmäßig herbeigeführte und in einem Lernmodus erfassbare Änderungen der Arbeitsphasen, beispielsweise eine Verkürzung oder Verlängerung von Betriebs- und/oder Pausenphasen im Rahmen einer veränderten Betriebsplanung des technischen Prozesses, beispielsweise durch veränderte Anforderungen an Menge und/oder Qualität eines Produkts, das durch den technischen Prozess hergestellt wird. Solche veränderte Arbeitsphasen stellen eigene Typen von Arbeitsphasen im Sinne der Erfindung dar, für die grundsätzlich eigene Datensätze von Häufigkeitsverteilungen in einem entsprechenden Lernmodus aufgenommen und im Prognosemodus verarbeitet werden können.

Das erfindungsgemäße Verfahren kann besonders vorteilhaft bei einer Mehrzahl von Prozessen eingesetzt werden, die dieselbe physikalische Größe als Kenngröße aufweisen. Die Kenngröße kann beispielsweise dem Verbrauch oder der Produktion eines Materie- oder Energiestroms entsprechen. Unter "Mehrzahl" wird hier "zwei oder mehr" verstanden. Befinden sich an einem Standort beispielsweise drei Prozesse, die dasselbe Gas verbrauchen, werden sie regelmäßig von derselben Produktionsanlage oder demselben Liefersystem versorgt. Hierbei ist es günstig, wenn für jeden technischen Prozess das oben beschriebene Verfahren durchgeführt wird und die Prognosewerte der Kenngröße der einzelnen technischen Prozesse zu einem Gesamtprognosewert überlagert werden.

Zunächst wird also das erfindungsgemäße Verfahren auf jeden der Prozesse getrennt angewendet. Das heißt für jeden der technischen Prozesse werden im Prinzip unabhängig von den anderen parallelen Prozessen zum Beispiel die Typen von Arbeitsphasen und die Kriterien für den Phasenbeginnzeitpunkt jedes Typs von Arbeitsphase festgelegt. Die Lernmodi verlaufen grundsätzlich ebenfalls unabhängig, und auch die Prognose wird unabhängig für jeden einzelnen Prozess erstellt. Erst die Prognosewerte aller erfassten Prozesse werden zu einem Gesamtprognosewert überlagert, insbesondere durch Addition. Bei dieser Addition können die unterschiedlichen Anlagen gegebenenfalls unterschiedlich gewichtet werden, falls dies im Einzelfall sinnvoll ist. Der zeitliche Verlauf des Gesamtprognosewerts ergibt eine realistische Prognose für die in der Zukunft benötigen Materie- oder Energiemengen, welche das Produktionsbeziehungsweise Liefersystem zu Verfügung stellen muss. Letzteres kann in seinem Betrieb frühzeitig an die zu erwartende Last angepasst werden.

Besonders dann, wenn die technischen Prozesse nicht systematisch synchronisiert sind, kann damit ein besonders effizienter Betrieb derjenigen Anlagen erreicht werden, deren Last oder deren Eingangsparameter von dem zeitlichen Verlauf der gemeinsamen Kenngröße abhängt. Insbesondere die Zusammenschaltung mehrerer überwiegend periodisch arbeitender Anlagen in einem Anlagenverbund, bei dem keine Planungsinformationen über die Prozesse vorliegen, kann mit dem beschriebenen Verfahren eine Prognose erstellt werden.

Selbstverständlich kann das erfindungsgemäße Verfahren auch auf eine Mehrzahl von technischen Prozessen angewendet werden, die qualitativ und/oder stofflich unterschiedlicher Materie- und/oder Energieströme bedürfen. Solche technischen Prozesse können beispielsweise sowohl Stickstoff als auch Sauerstoff verbrauchen oder sowohl ein Gas als auch Energie benötigen. Das Verfahren kann dann für mehrere Kenngrößen (verschiedene Materieströme, ein Materie- und ein Energiestrom etc.) parallel ausgeführt werden. Die Prognoseverfahren für unterschiedliche Kenngrößen können sich aber auch gegenseitig unterstützen, insbesondere hinsichtlich ihrer Selbstaktualisierung.

Die Erfindung sowie weitere Einzelheiten der Erfindung werden im Folgenden anhand eines in den Zeichnungen dargestellten Ausführungsbeispiels näher erläutert. Der technische Prozess wird in dem Ausführungsbeispiel durch einen Stahlkonverterprozess gebildet, die Kenngröße durch den momentanen Sauerstoffverbrauch des Stahlkonverters gemessen in $Nm^3/min$. Hierbei zeigen:

Figur 1     den tatsächlichen zeitlichen Verlauf des Sauerstoffverbrauchs (der Kenngröße) des Stahlkonverterprozesses während des Lernmodus, bei dem sich Betriebsphasen und Pausenphasen abwechseln,

Figur 2     ein Histogramm, das die im Lemmodus bestimmten relativen Häufigkeiten der Dauer der Betriebsphasen zeigt,

Figur 3     ein Histogramm, das die im Lernmodus bestimmten relativen Häufigkeiten der Dauer der Pausenphasen zeigt, und

Figur 4     zwei Diagramme, die Figur 1 und Figur 2 ähneln, aber auf den Prognosemodus bezogen sind.

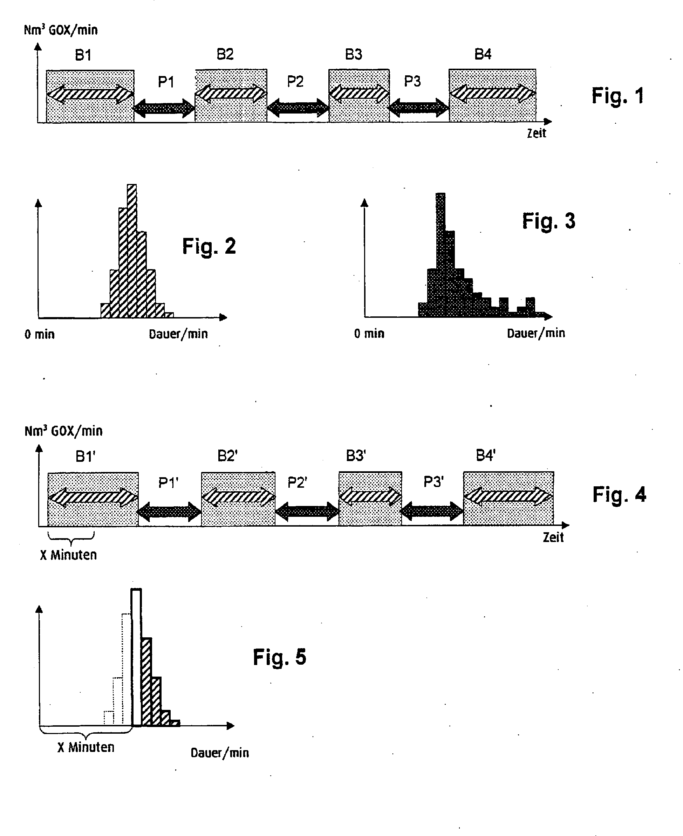

Der Stahlkonverterprozess des Ausführungsbeispiels weist zwei Typen von Arbeitsphasen auf, nämlich Betriebsphasen B1, B2, B3, B4 und Pausenphasen P1, P2, P3, die einander im regulären Betrieb abwechseln, wie es in dem Diagramm von Figur 1 für dreieinhalb Arbeitszyklen des Lernmodus dargestellt ist. Während einer Betriebsphase, des Blasens, wird eine im Wesentlichen konstante Menge an gasförmigem Sauerstoff (GOX) verbraucht, im Folgenden Standardmenge genannt. In den Pausenphasen zwischen den Blasevorgängen wird kein Sauerstoff benötigt. Der Beginn einer Betriebsphase wird durch das Überschreiten eines Schwellenwerts des Sauerstoffverbrauchs angezeigt, der Beginn einer Pausenphase durch dessen Unterschreiten.

Jede der Phasen weist eine individuelle Dauer $\tau_k$ auf, die in Figur 1 durch jeweils einen Doppelpfeil repräsentiert ist. Während des Lemmodus werden nun über eine große Zahl von Arbeitzyklen die Dauern der Betriebs- und Pausenphasen gemessen. Für die typgleichen Arbeitsphasen werden diese Messwerte gemeinsam geordnet gesammelt. Daraus ergibt sich je eine Häufigkeitsverteilung der Dauer der Betriebsphasen (Figur 2) und der Pausenphasen (Figur 3). In dem Beispiel beträgt die zeitliche Auflösung der Histogramme eine Minute.

Der höchste Balken in Figur 2 zeigt diejenige Phasendauer an, die bei den Betriebsphasen am häufigsten vorkommt. Phasendauem, die kürzer oder länger sind, sind wenig häufig. Sehr kurze und sehr lange Dauern kommen gar nicht vor. Die Pausenphasen (Figur 3) zeigen eine etwas andere Häufigkeitsverteilung.

Im Prognosemodus durchläuft der Prozess die in Figur 4 dargestellten Phasen B1' bis B4' beziehungsweise P1' bis P3'. Der Beginn der Betriebsphase B1' wurde durch Überschreiten des entsprechenden Schwellenwerts des Sauerstoffverbrauchs detektiert. In einem bestimmten Takt der Echtzeit (in dem Beispiel jede Minute) wird nun ein Berechnungslauf durchgeführt, um Daten über den zu erwartenden zukünftigen Verlauf der Kenngröße zu berechnen. Im Folgenden wird nun ein solcher Berechnungslauf näher beschrieben, der zu dem in den Figuren 4 und 5 dargestellten aktuellen Zeitpunkt durchgeführt, zu dem die derzeitige Betriebsphase B1' schon X Minuten dauert. (Der rechts davon liegende Teil von Figur 4 repräsentiert also die Zukunft, die Minuten X+1, X+2 etc. nach Phasenbeginn.)

Im Rahmen der ersten Variante der Erfindung wird nun die Abbruchwahrscheinlichkeit der aktuellen Arbeitsphase für die unmittelbare Zukunft ermittelt, also die Wahrscheinlichkeit, dass die aktuelle Betriebsphase B1' zu einem bestimmten zukünftigen Zeitpunkt zu Ende ist, und zwar für äquidistante Zeitpunkte in der Zukunft, hier den Minuten X+1, X+2 etc. nach Phasenbeginn. Dazu wird das entsprechende, im Lemmodus erzeugte Histogramm der Figur 2 so ausgewertet, wie es in Figur 5 dargestellt ist. Die Abbruchwahrscheinlichkeit am zukünftigen Zeitpunkt X+1 Minuten nach Phasenbeginn wird zum Beispiel als Quotient der Fläche des fett umrandeten, aber nicht schraffierten Balkens und der gesamten fett umrandeten Fläche in Figur 5 ermittelt. Die Abbruchwahrscheinlichkeit am zukünftigen Zeitpunkt X+2 Minuten nach Phasenbeginn ist gleich der Fläche des ersten (linken) schraffierten Balkens geteilt durch die gesamte fett umrandete Fläche in Figur 5. Der Prognosewert der Kenngröße zu dem in der Zukunft liegenden Zeitpunkt wird aus der Abbruchwahrscheinlichkeit bei der diesem Zeitpunkt entsprechenden Phasendauer berechnet, und zwar durch Multiplikation des Werts (1 - Abbruchwahrscheinlichkeit) mit dem Standardwert des Sauerstoffverbrauchs.

Diese Berechnung wird in dem Ausführungsbeispiel für eine bestimmte Anzahl von in der Zukunft liegenden Minuten durchgeführt, sodass sich ein zeitlicher Verlauf des Prognosewerts für jede in der Zukunft liegende Minute bis zu einem gewünschten Prognosehorizont ergibt.

In der nächsten Minute der Echtzeit (X' = X+1 Minuten nach Beginn der Phase B1') wird der Berechnungslauf in analoger Weise erneut durchgeführt und der zeitliche Verlauf des Prognosewerts neu bestimmt. Dies wird wiederholt, solange sich der Stahlkonverterprozess weiterhin in der Betriebsphase B1' befindet.

Endet die Betriebsphase B1' tatsächlich und beginnt damit die Pausenphase P1', stellt das Prognosesystem dies durch Unterschreiten des entsprechenden Schwellenwerts des Sauerstoffverbrauchs fest. In diesem Fall wird auf das Histogramm der Figur 3 umgeschaltet und mit einer analogen Methode die Abbruchwahrscheinlichkeit der Pausenphase P1' bestimmt. Der Prognosewert der Kenngröße zu einem in der Zukunft liegenden Zeitpunkt wird aus der Abbruchwahrscheinlichkeit bei der diesem Zeitpunkt entsprechenden Phasendauer berechnet, und zwar in der Pausenphase durch Multiplikation der ermittelten Abbruchwahrscheinlichkeit mit dem Standardwert des Sauerstoffverbrauchs.

Aus der Prognose für den Sauerstoffverbrauch kann grundsätzlich ein Steuersignal für das Gasversorgungssystem gebildet werden, das den Sauerstoff liefert und beispielsweise eine Luftzerlegungsanlage aufweist. Mit Hilfe dieses Steuersignals kann die Produktionsmenge der Luftzerlegungsanlage frühzeitig an den zu erwartenden Verbrauch angepasst werden.

Im Rahmen des Ausführungsbeispiels weist das Stahlwerk jedoch eine Mehrzahl von Sauerstoff verbrauchenden technischen Systemen auf, die aus demselben Gasversorgungssystem gespeist werden, nämlich zwei Hochöfen und drei Stahlkonverter. Hierbei wird das oben anhand der Zeichnungen beschriebene Vorhersageverfahren auf jeden dieser quasi-periodischen technischen Prozesse einzeln angewendet. Selbstverständüch ergeben sich im Lernmodus für jeden Einzelprozess abweichende Histogramme, die aber denjenigen der Figuren 2 und 3 strukturell ähnlich sind. Im Prognosemodus werden die Prognosewerte der Kenngröße der einzelnen technischen Prozesse zu einem Gesamtprognosewert überlagert, beispielsweise durch Addition, sodass sich ein zeitlicher Verlauf des Gesamtprognosewerts ergibt und damit eine zuverlässige Vorhersage des Gesamtverbrauchs an Sauerstoff für die nähere Zukunft. Der Gesamtverbrauch dient wiederum zur vorwärts gerichteten Steuerung des Gasversorgungssystems, insbesondere der Luftzerlegungsanlage.

Durch Anwendung eines Monte-Carlo-Ansatzes kann aus den Verteilungen für Betriebs- und Ruhephasen für jede Minute eine nach der Häufigkeit gewichtete Berechnung durchgeführt werden. Die Summation dieser gewichteten Betriebsfälle ergibt einen Mittelwert für jede in der Zukunft liegende Minute, außerdem kann auf diese Weise auch ein Konfidenzintervall für die Prognose angegeben werden.

**Patentansprüche**

1. Verfahren zur Vorhersage einer zeitlich variablen Kenngröße eines technischen Prozesses, der mindestens zwei Typen von Arbeitsphasen aufweist, die wiederholt nacheinander durchlaufen werden und jeweils eine variable Dauer aufweisen, wobei bei dem Verfahren in einem Lernmodus über einen Erfahrungszeitraum

    - jeder Typ von Arbeitsphase mehrfach durchlaufen wird,
    - für jeden Typ von Arbeitsphase bei einer Mehrzahl von Durchläufen die tatsächliche Dauer der jeweiligen Arbeitsphase gemessen wird, und
    - diese Zeitdauer für alle analysierten, typgleichen Arbeitsphasen in der Vergangenheit gemeinsam geordnet gesammelt wird, sodass sich eine Häufigkeitsverteilung der Dauer des entsprechenden Typs von Arbeitsphase ergibt,
und bei dem in einem Prognosemodus zu einem aktuellen Zeitpunkt
    - der aktuelle Typ von Arbeitsphase ermittelt wird,
    - die bisher verstrichene Phasendauer bestimmt wird und
    - auf der Grundlage der im Lernmodus ermittelten Häufigkeitsverteilung der Dauer des entsprechenden Typs von Arbeitsphase ein Prognosewert der Kenngröße an mindestens einem in der Zukunft liegenden Zeitpunkt bestimmt wird.

2. Verfahren nach Anspruch 1, **dadurch gekennzeichnet, dass** in dem Prognosemodus ein zeitlicher Verlauf des Prognosewerts der Kenngröße vom aktuellen Zeitpunkt aus bis zu einem Prognosehorizont bestimmt wird

3. Verfahren nach Anspruch 1 oder 2, **dadurch gekennzeichnet, dass** zusätzlich zum Prognosewert der Kenngröße ein Wahrscheinlichkeitswert ermittelt wird, der die Wahrscheinlichkeit repräsentiert, dass ein für einen bestimmten Zeitpunkt ermittelter Prognosewert eintritt.

4. Verfahren nach einem der Ansprüche 1 bis 3, **dadurch gekennzeichnet, dass** in dem Prognosemodus der Prognosewert der Kenngröße zu dem in der Zukunft liegenden Zeitpunkt aus der Abbruchwahrscheinlichkeit bei der diesem Zeitpunkt entsprechenden Phasendauer berechnet wird.

5. Verfahren nach einem der Ansprüche 1 bis 4, **dadurch gekennzeichnet, dass** in dem Prognosemodus zur Berechnung des Prognosewerts der Kenngröße eine Methode in Anlehnung an eine Monte-Carlo-Methode eingesetzt wird, wobei in die Berechnung mehrere, insbesondere alle im Lernmodus gemessenen Durchläufe des entsprechenden Typs von Arbeitsphase eingehen, die eine Dauer aufweisen, die mindestens gleich der bisher verstrichenen Phasendauer ist und die entsprechend der Häufigkeit ihres Auftretens gewichtet werden.

6. Verfahren nach einem der Ansprüche 1 bis 5, **dadurch gekennzeichnet, dass** auch während des Prognosemodus weiter für jeden Typ von Arbeitsphase die tatsächliche Dauer der jeweiligen Arbeitsphase gemessen wird und mit Hilfe dieser Messwerte kontinuierlich oder von Zeit zu Zeit eine Aktualisierung der Häufigkeitsverteilungen der Dauer der typgleichen Arbeitsphasen vorgenommen und damit der Erfahrungszeitraum in die jüngere Vergangenheit ausgedehnt wird.

7. Verfahren nach Anspruch 6, **dadurch gekennzeichnet, dass** bei der Aktualisierung der Häufigkeitsverteilungen am Ende des Erfahrungszeitraums mit denjenigen am Beginn des Erfahrungszeitraums verglichen werden und, insbesondere wenn die Abweichung ein Schwellenkriterium überschreitet, die Messwerte zu Beginn des bisherigen Erfahrungszeitraums in der Prognosephase nicht mehr berücksichtigt werden, indem ein neuer Erfahrungszeitraum festgelegt wird, der den Beginn des bisherigen Erfahrungszeitraums nicht mehr enthält.

8. Verfahren nach einem der Ansprüche 1 bis 7, **dadurch gekennzeichnet, dass** im Lernmodus und/ oder im Prognosemodus ein oder mehrere Typen von Sonderbetriebsfällen berücksichtigt werden.

9. Verfahren zur Vorhersage einer zeitlich variablen Kenngröße einer Mehrzahl von technischen Prozessen, wobei für jeden technischen Prozess ein Verfahren nach einem der Ansprüche 1 bis 8 durchgeführt wird und die Prognosewerte der Kenngröße der einzelnen technischen Prozesse zu einem Gesamtprognosewert überlagert werden.

10. Verfahren nach einem der Ansprüche 1 bis 9, **dadurch gekennzeichnet, dass** aus dem Prognosewert beziehungsweise dem Gesamtprognosewert ein Steuersignal gebildet und an mindestens eine außerhalb des beziehungsweise der technischen Prozesse betriebene technische Anlage weitergeleitet wird, welche die Kenngröße beeinflusst oder von ihr beeinflusst wird.

11. Anwendung des Verfahrens nach einem der Ansprüche 1 bis 10, wobei

   - der oder die technischen Prozesse mindestens einen Materie- oder Energiestrom verbraucht/ verbrauchen beziehungsweise liefert/liefern,
   - dieser Materie- oder Energiestrom von einem Produktions- beziehungsweise Verbrauchssystem geliefert beziehungsweise verbraucht wird,
   - die Kenngröße durch den Umfang dieses Materie- oder Energiestroms gebildet wird und
   - der Prognosewert der Kenngröße bei der Steuerung des Produktionsbeziehungsweise Verbrauchssystems berücksichtigt wird.

12. Computerprogramm mit Programmcode, der bei Ablauf des Computerprogramms auf einem geeigneten Rechnersystem ein Verfahren nach einem der Ansprüche 1 bis 10 ausführt.

13. Computerprogrammprodukt mit Programmcode, der bei Ablauf des Computerprogramms auf einem geeigneten Rechnersystem ein Verfahren nach einem der Ansprüche 1 bis 10 ausführt.

14. Computerlesbares Datenträgermedium mit einem darauf gespeicherten Computerprogramm, wobei das Computerprogramm Programmcodemittel umfasst, die bei Ablauf des Computerprogramms auf einem geeigneten Rechnersystem ein Verfahren nach einem der Ansprüche 1 bis 10 ausführen.

Nm³ GOX/min

Fig. 1

Fig. 2

Fig. 3

0 min          Dauer/min

0 min          Dauer/min

Nm³ GOX/min

Fig. 4

X Minuten

Fig. 5

X Minuten          Dauer/min

Europäisches
Patentamt

European
Patent Office

Office européen
des brevets

**EUROPÄISCHER RECHERCHENBERICHT**

Nummer der Anmeldung

EP 08 01 9906

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 533 669 A (RENNER PETER [DE]) 25. Mai 2005 (2005-05-25) * Absatz [0013] - Absatz [0019] * ----- | 1 | INV. G05B13/02 |
| A | US 2005/159922 A1 (HSIUNG CHANG-MENG B [US] ET AL HSIUNG CHANG-MENG B [US] ET AL) 21. Juli 2005 (2005-07-21) * Absatz [0068] * * Absatz [0071] * ----- | | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 31. März 2009 | Kelperis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 9906

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2009

| Im Recherchenbericht angeführtes Patentdokument | Datum der Veröffentlichung | Mitglied(er) der Patentfamilie | Datum der Veröffentlichung |
|---|---|---|---|
| EP 1533669 A | 25-05-2005 | AT 393922 T<br>US 2005171705 A1 | 15-05-2008<br>04-08-2005 |
| US 2005159922 A1 | 21-07-2005 | KEINE | |

EPO FORM P0461

Für nähere Einzelheiten zu diesem Anhang : siehe Amtsblatt des Europäischen Patentamts, Nr.12/82